(19)

Europäisches Patentamt
European Patent Office
Office européen des brevets

(11) **EP 2 858 008 B1**

(12) **EUROPEAN PATENT SPECIFICATION**

(45) Date of publication and mention
of the grant of the patent:
**07.11.2018 Bulletin 2018/45**

(51) Int Cl.:
**G06K 9/00** (2006.01)     **G06T 7/20** (2017.01)
**G06K 9/34** (2006.01)     **G06T 7/00** (2017.01)

(21) Application number: **14185926.4**

(22) Date of filing: **23.09.2014**

(54) **Target detecting method and system**

Zieldetektionsverfahren und -system

Procédé et système de détection de cible

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2013  CN 201310450046**

(43) Date of publication of application:
**08.04.2015  Bulletin 2015/15**

(73) Proprietor: **Ricoh Company, Ltd.
Tokyo 143-8555 (JP)**

(72) Inventors:
• **Chen, Chao
Beijing 100044 (CN)**
• **Lu, Yaojie
Beijing 100044 (CN)**
• **Shi, Zhongchao
Beijing 100044 (CN)**
• **Wang, Gang
Beijing 100044 (CN)**

(74) Representative: **White, Duncan Rohan et al
Marks & Clerk LLP
Fletcher House (2nd Floor)
Heatley Road
The Oxford Science Park
Oxford OX4 4GE (GB)**

(56) References cited:
• **BADENAS J ET AL: "Motion-based segmentation
and region tracking in image sequences",
PATTERN RECOGNITION, ELSEVIER, GB, vol. 34,
no. 3, 1 March 2001 (2001-03-01), pages 661-670,
XP004321293, ISSN: 0031-3203, DOI:
10.1016/S0031-3203(00)00014-5**

• **ZHEN JIA ET AL: "Vision based autonomous
vehicles target visual tracking with multiple
dynamics models", NETWORKING, SENSING
AND CONTROL, 2005. PROCEEDINGS. 2005 IEEE
TUCSON, AZ, USA MARCH 19-22, 2005,
PISCATAWAY, NJ, USA,IEEE, 19 March 2005
(2005-03-19), pages 1081-1086, XP010813435,
DOI: 10.1109/ICNSC.2005.1461348 ISBN:
978-0-7803-8812-3**
• **Hadi Sadoghi Yazdi ET AL: "Vehicle Tracking by
a Motion History Graph", Proceedings of Machine
Vision and Image Processing 2007, 15 February
2007 (2007-02-15), pages 1-9, XP055174540,
Mashhad, Iran Retrieved from the Internet:
URL:http://confnews.um.ac.ir/images/41/con
ferences/mvip07/pdf/p_8.pdf [retrieved on
2015-03-06]**
• **"Handbuch Fahrerassistenzsysteme :
Grundlagen, Komponenten und Systeme für
aktive Sicherheit und Komfort, Chapter 15:
Maschinelles Sehen ED - Winner Hermann; Hakuli
Stephan; Wolf Gabriele", 1 January 2009
(2009-01-01), HANDBUCH
FAHRERASSISTENZSYSTEME : GRUNDLAGEN,
KOMPONENTEN UND SYSTEME FÜR AKTIVE
SICHERHEIT UND KOMFORT, VIEWEG +
TEUBNER, WIESBADEN, PAGE(S) 216 - 219,
XP002730622, ISBN: 978-3-8348-0287-3 * page
217 ***
• **KEVIN CANNONS: "A Review of Visual Tracking",
TECHNICAL REPORT CSE-2008-07, YORK
UNIVERSITY, DEPARTMENT OF COMPUTER
SCIENCE AND ENGINEERING, CA, 16 September
2008 (2008-09-16), pages 1-242, XP007909480,**

## Description

## BACKGROUND OF THE INVENTION

### 1. Field of the Invention

The present invention relates to a method and a system for detecting a target. Specifically, the present invention relates to a method and a system for detecting a target in an autonomous operation of a vehicle; in such a method and a system, an analysis of a target set is performed based on displacement vector features, spatial adjacency features and tracking information, and feature regions and feature values are continuously enhanced by self-learning, so that the detection performance is improved.

### 2. Description of the Related Art

With the widespread use of video detection, there is demand for increasingly higher accuracy of detecting targets in the video image. Additionally, with the demand for autonomous operation, it is important for the autonomous operation of a vehicle to reliably acquire a 3D road environment. The recognition of a 3D road environment mainly includes road estimation, vanishing point calculation, target detection, etc. The target detection is the most important part, as it directly impacts the control of an autonomous vehicle.

Many target detection methods are provided, based on features of targets which appear in an image. In U.S. Patent Application Publication US005937079A, a method for stereo image object detection is disclosed; in said U.S. Patent Application, target detection is performed by a stereo image estimation. Corresponding disparity values are then determined for the pixels in the other structure classes and are collected in a disparity histogram with a given frequency increment. The pixel group that belongs to a given grouping point area of the histogram is then interpreted as an object to be detected. In said U.S. Patent Application, the target cannot be determined by the disparity histogram, when there are a plurality of targets in the given grouping point area or at the same distance.

In U.S. Patent US7801330B2, a method of detecting and tracking a target from video streams is disclosed. Such a method includes receiving video from a scene, detecting moving pixels in the video, detecting line segments or motion blocks in the video based on the detected moving pixels, identifying targets in the video based on the detected line segments or motion blocks, tracking targets in the video based on the identified targets, and managing the tracked targets in the video. In said U.S. Patent, line segments or motion blocks are detected in each of frames to perform matching.

In general, there are two types of target detection methods: (1) the detection method based on frame information, and (2) the detection method based on inter-frame information. In the first method, a target is detected by performing clustering for reliable points based on spatial distribution characteristics. This method is very effective for a detection in a simple scene; however, the division effect for adjacent targets in a complex scene is bad, and a large target may be divided into several small targets incorrectly. In the second method, a target is detected based on relative motion information obtained by performing a matching between frames. The amount of calculation in this method usually is large, and the determination of the shift of pixels is unstable.

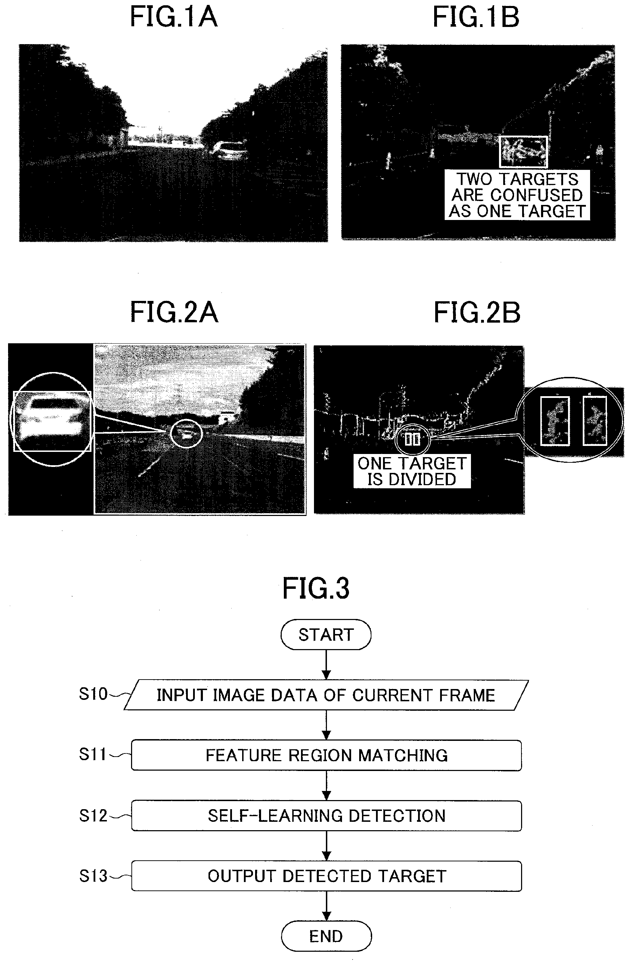

Detecting a target in a disparity map based on frame information is widely used as a target detection method. However, there are still some problems in such a method. For example, the parameters of a camera are not accurate, therefore the result of a calculation of the disparity is also not accurate. The variance of the disparities of the same target is large, therefore it is difficult to distinguish adjacent targets. As illustrated in FIGs. 1A and 1B, a pedestrian and a vehicle that are two targets as illustrated in the grayscale image of FIG. 1A are recognized as the same one target in the disparity map of FIG. 1B. The rectangular frame in FIG. 1B is the detected target region. In a sparse disparity map, there are hardly any disparity values in the horizontal edges of the target in the disparity map obtained by a horizontal binocular camera, therefore the same one target is easily divided into different small targets. As illustrated in FIGs. 2A and 2B, there is no disparity in intermediate horizontal edge parts of the back of a vehicle, because an accurate matching result cannot be obtained from the intermediate parts of the vehicle in the disparity map obtained by a horizontal binocular camera; as a result, the vehicle is recognized as two parts. The two rectangular frames in FIG. 2B are the detected target regions.

Badenas J et al: "Motion-based segmentation and region tracking in image sequences", Pattern Recognition, Elsevier, GB, vol. 34, no. 3, 1 March 2001 (2001-03-01), pages 661-670, XP004321293, ISSN: 0031-3203, DOI: 10.1016/30031-3203(00)00014-5 discloses a method for detecting a target, the method comprising obtaining an image of a current frame of a current scene; predicting, based on history information in a history sequence of images of a plurality of sequential frames before the current frame, feature regions of the image of the current frame; performing, based on features extracted according to the need of a specific application, a matching of the feature regions between the feature regions predicted in the image of the current frame and feature regions in an image of a previous frame; performing, based on displacement vectors and spatial adjacency between the matched feature regions in the image of the current frame, and tracking information, a target set analysis for the feature regions of the image of the current frame to obtain a set of the feature regions of the target to be detected, and outputting the obtained set of the feature regions as the target; performing, based on the extracted features and the spatial adjacency, a clustering for points that are not matched; and updating, by using the result of the target set analysis and the result of the clustering, the feature regions of the image of the current frame and the features of the feature regions, so that the above steps are repeated for an image of a next frame.

Kevin Cannons: "A Review of Visual Tracking", Technical Report CSE-2008-07, York University, Department of Computer Science and Engineering, CA, 16 September 2008 (2008-09-16), pages 1-242, XP007909480 discloses in a survey on visual tracking, the use of contours as a tracking feature.

## SUMMARY OF THE INVENTION

The invention is in the method of claim 1. A further aspect of the invention is in the method of claim 2. The corresponding system of the method is in claim 3.

## BRIEF DESCRIPTION OF THE DRAWINGS

FIGs. 1A and 1B are schematic drawings illustrating that two adjacent targets in a disparity map are confused as one target in a prior art system;

FIGs. 2A and 2B are schematic drawings illustrating that one target in a disparity map is recognized as two targets in the prior art;

FIG. 3 is an overall flowchart illustrating a method for detecting a target according to an embodiment of the present invention;

FIG. 4 is a flowchart illustrating a feature matching of the method according to an embodiment of the present invention;

FIG. 5A is a schematic drawing illustrating feature regions in an image of a previous frame;

FIG. 5B is a schematic drawing illustrating feature regions in an image of a current frame (a new real-time screen) obtained by a prediction of the feature region;

FIG. 6 is a schematic drawing illustrating a result of a feature region matching for the predicted feature regions illustrated in FIG. 5B;

FIG. 7 is a flowchart of a self-learning detection of the method according to an embodiment of the present invention;

FIG. 8 is a flowchart of a target set analysis of the method according to an embodiment of the present invention;

FIG. 9A is schematic drawing illustrating the determination of displacement vectors;

FIG. 9B is an enlarged schematic drawing illustrating the displacement vectors determined in FIG. 9A;

FIGs. 9C and 9D are schematic drawings illustrating the corrected displacement vectors for the displacement vectors illustrated in FIGs. 9A and 9B;

FIG. 10 is a schematic drawing illustrating a target set integrated by the feature regions;

FIG. 11 is a schematic drawing illustrating the feature region obtained by determining a potential target region;

FIG. 12 is a schematic drawing illustrating a result of a clustering of unmatched points;

FIG. 13A is a schematic drawing illustrating a result that a potential target region is not integrated with a target set but is updated as a new feature region;

FIG. 13B is a schematic drawing illustrating a result that a target set and a potential target region are integrated and are updated as a new feature region;

FIG. 13C is a schematic drawing illustrating a result that a region obtained by performing a clustering of unmatched points is updated as a new feature region;

FIG. 14A is an original disparity map of the current frame;

FIG. 14B is a schematic drawing illustrating a result of a conventional target detection method (such as a method based on frame information);

FIG. 14C is a schematic drawing illustrating a result of the detection method according to an embodiment of the present invention;

FIG. 15A is an original disparity map of the current frame;

FIG. 15B is a schematic drawing illustrating a result of a conventional target detection method (such as a method based on frame information);

FIG. 15C is a schematic drawing illustrating a result of the detection method according to an embodiment of the present invention; and

FIG. 16 is a functional block diagram illustrating a system for detecting a target according to an embodiment of the present invention.

## DETAILED DESCRIPTION OF THE PREFERRED EMBODIMENTS

In the following, embodiments of the present invention are described with reference to the accompanying drawings, so as to facilitate the understanding of the present invention.

As illustrated in FIG. 3, the embodiment of the present invention provides a method for detecting a target. First, in step S10, an image obtainment unit (image input unit) 10, such as a binocular camera captures a real-time screen including a disparity map or a grayscale image of a current scene, and outputs it to a feature region generation unit 11 (described below). And then, in step S11, the feature region generation unit 11 predicts feature regions in a new real-time screen based on a history sequence of each of the feature regions, and performs a matching of the feature regions to obtain the feature regions in the new real-time screen. The feature region generation unit 11 sends the matched feature regions to a self-learning detection unit 12 (described below). In step S12, the self-learning detection unit 12 performs a target set analysis for the matched feature regions in the image of the current frame, performs clustering for unmatched points based on extracted features and the spatial adjacency to form a new feature region, and updates the feature regions in the image of the current frame and features in these feature regions and sends the update result to an output unit 13 (described below). And then, in step S13, the output unit 13 outputs the new feature regions as a detection target in the new real-time screen.

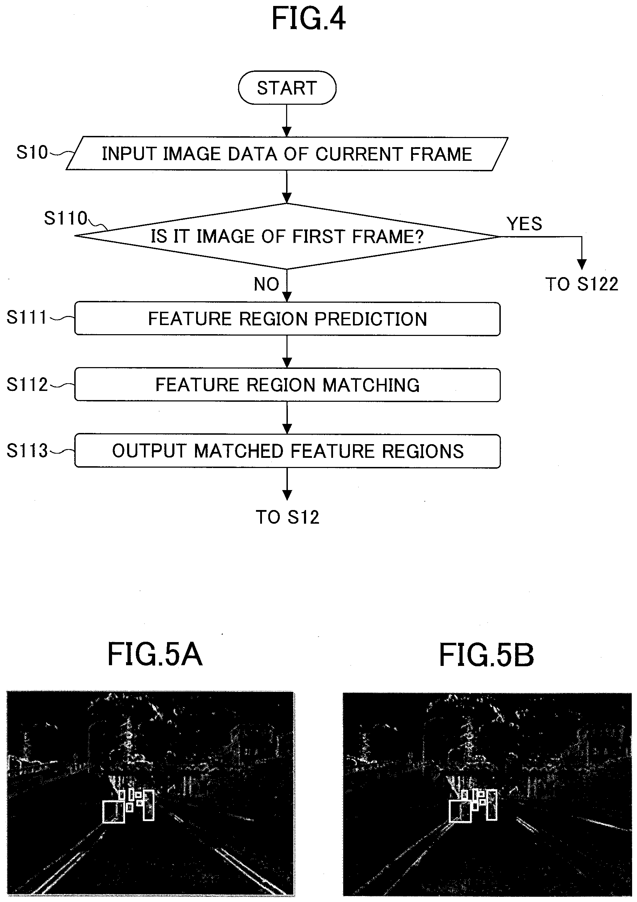

FIG. 4 is a flowchart of a feature matching method according to an embodiment of the present invention. As illustrated in FIG. 4, first, for the grayscale image and the disparity map of the real-time screen obtained in step S10, in step S110, it is determined whether the real-time screen is the image of the first frame received by the target detection system according to the present invention. If it is the image of the first frame, the process proceeds to step S122 described below. If it is not the image of the first frame, the process proceeds to step Sill. In step Sill, for the obtained image, a feature region prediction unit 111 predicts positions of each of the feature regions in the image of the next frame (the new real-time screen) by establishing a motion model by a tracking filter. The tracking filter, such as a Kalman filter, may establish a motion model to describe motion state parameters of each of the feature regions. Alternatively, other conventional filters may also be used. The position $P_{n+1}$ and size $S_{n+1}$ of the feature region in the next frame may be predicted by the tracking filter, based on the history sequence T stored in the system.

As an example, motion traces of the feature regions are recorded in the history sequence T stored in the system as follows.

$$T = \{T_n, T_{n-1}, ..., T_0\}$$

$$T_i = \{O_0, O_1, ..., O_m\}$$

$$O_j = \{P_i, V_i, S_i ...\}$$

Where, $O_j$ is a state of the target (feature region), that includes a position $P_i$, a velocity $V_i$, a size $S_i$, etc., in the ith frame. $T_i$ includes states of m targets in the ith frame. T includes history information of the frames from the 0th frame to the nth frame.

FIG. 5A is a schematic drawing illustrating feature regions in an image of a previous frame. FIG. 5B is a schematic drawing illustrating feature regions in an image of a current frame (a new real-time screen) obtained by a prediction of the feature region.

In an embodiment of the present invention, the target detection method may be used for the first time, that is to say, it may be determined that the real-time screen is the image of the first frame in step S110. In such a case where the target detection method according to an embodiment of the present invention is used for the first time, the above steps may be not performed, and step S122 of the clustering of unmatched points described below may be directly performed. That is, in step S122, for the initial screen, pixels belonging to the same space are classified into one classification to form a feature region, by clustering based on spatial adjacency. For example, clustering of points that have similar disparity values and are adjacent in X and Y directions is performed by a clustering method (such as connected component analysis (CCA), K-means clustering or the like). For the subsequent second frame, matching is performed in a certain spatial range based on the characteristics of the specific detection target, so as to obtain the feature regions (or the target regions) in the image of the second frame. For example, if the detection is a person, a normal movement distance of the person in an interval between two frames is set based on a normal movement velocity of the person, matching of the feature regions is performed in a range of the normal movement distance (such as a distance of 1, 2, 3, 4 or 5 pixels) with the feature region of the first frame as a center, and the matched regions are set as the feature regions of the second frame. The above history sequence T is established based on the feature regions of the first and second frames, and step S111 is performed for a new real-time screen. Alternatively, it may also be unnecessary to determine whether the current frame is the first frame. In an actual detection method according to an embodiment of the present invention, the system usually predetermines history sequences corresponding to some specific applications, the history information recorded in the predetermined history sequences usually is similar to the actual environments corresponding to the specific applications, and the prediction result of the feature regions is almost accurate. Furthermore, the detection result can also be corrected by a subsequently performed clustering step of the unmatched points, even though the prediction result of the feature regions is not accurate.

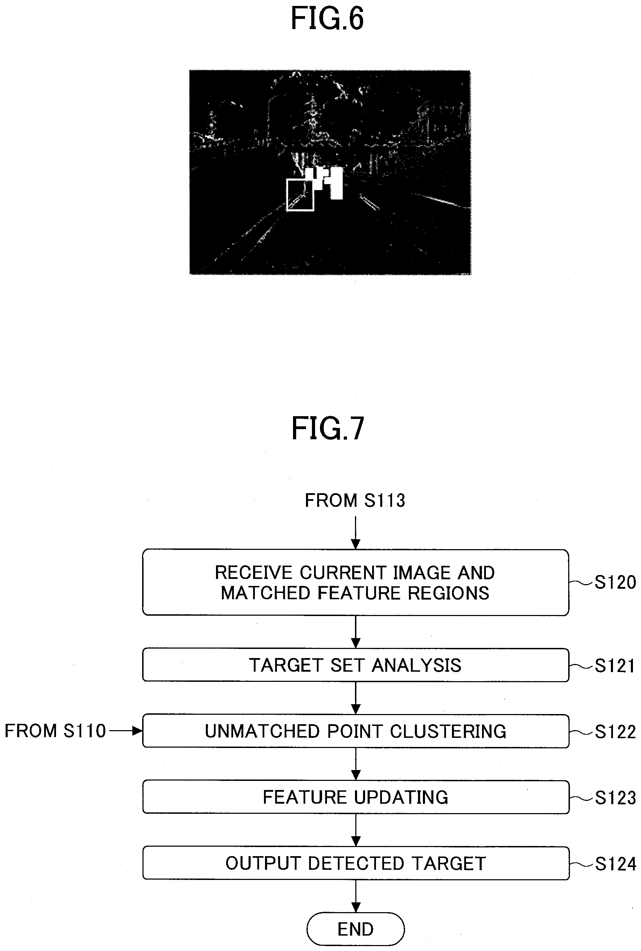

After the prediction of the feature regions in the image of the current frame (the new real-time screen) is performed, in step S112, a feature region matching unit 112 performs matching of the feature regions between the feature regions predicted in the image of the current frame and feature regions in an image of a previous frame, based on the extracted features. The extracted features may be different in different actual applications. The features that are extracted to perform the matching of the regions may be texture, corner points, shape or the like. As an example of vehicle detection, symmetry features may be extracted to perform the matching. As an example of person detection, the texture or shape features may be extracted to perform the matching. The extraction of the features may use any one of the conventional methods. The matching method may correspond to the different extracted features. A corresponding matching method, such as histogram matching, template matching, or the like may be used. FIG. 6 is a schematic drawing illustrating a result of feature region matching for the predicted feature regions illustrated in FIG. 5B. As illustrated in FIG. 6, the solid frames show the matched feature regions, and the hollow rectangular frame shows the unmatched feature region. The feature regions in the lower-left portion of the vehicle are not matched, because the lane line changes between the rectangular frames of the adjacent frames.

As for the above description for step Sill, in the initial stage of the detection method according to an embodiment of the present invention, for the first frame, step S112 is not performed and the clustering step of the unmatched points described below is directly performed, since there is no basis for the matching of the first frame.

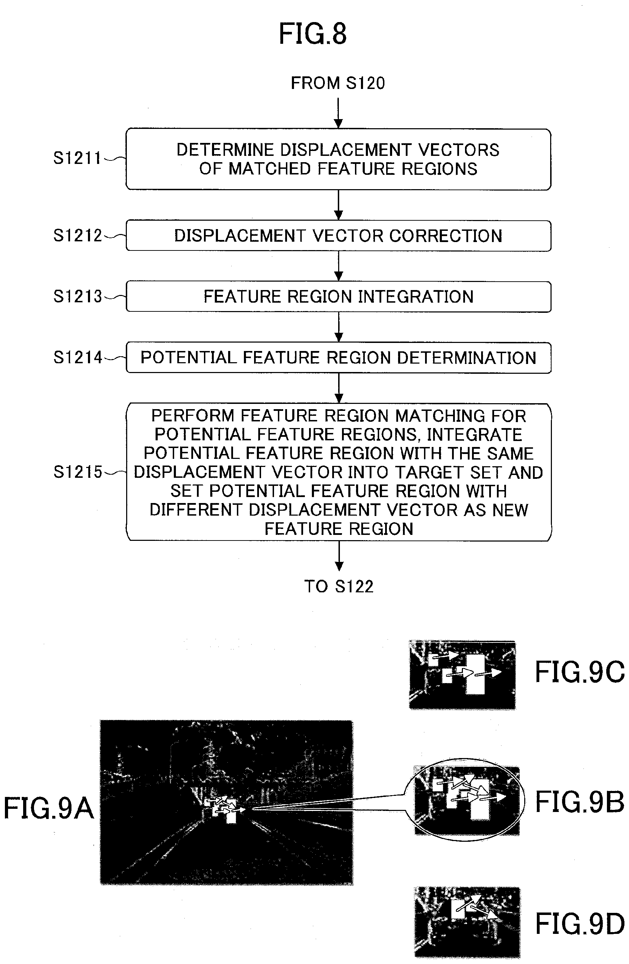

FIG. 7 is a flowchart of self-learning detection of the method according to an embodiment of the present invention. As illustrated in FIG. 7, after the matched feature regions obtained by performing the matching of the feature regions of the current frame and the original image are received in step S120, in step S121, a target set analysis unit 121 performs a target set analysis for the feature regions to obtain a set of the feature regions of the target, based on displacement vectors and spatial adjacency of the matched feature regions and tracking information. FIG. 8 is a flowchart of a target set analysis of the method according to an embodiment of the present invention.

As illustrated in FIG. 8, after the matched feature regions obtained by performing the matching of the feature regions of the current frame and the original image are received in step S120, in step S1211, a displacement vector determination unit 1211 included in the target set analysis unit 121 calculates the displacement vectors of the matched feature regions in the image of the current frame, based on relative displacement states of the matched feature regions in the images of the plurality of sequential frames before the current frame. The specific calculation method may be a conventional displacement vector calculation method. FIG. 9A is schematic drawing illustrating the determination of displacement vectors. FIG. 9B is an enlarged schematic drawing illustrating the displacement vectors determined in FIG. 9A. The white arrows in FIGs. 9A and 9B show the calculated displacement vectors of the feature regions. For the unmatched feature regions or unmatched pixels, their displacement vectors cannot be calculated.

Next, in step S1212, a displacement vector correction unit 1212 included in the target set analysis unit 121 corrects the calculated displacement vectors of the feature regions, based on tracking trace. As described above, history tracking sequences of the feature regions are stored in the system using the target detection method according to the present invention, and motion trace information of each of the feature regions is recorded in the history tracking sequences. As an example in which a vehicle serves as the detection target, during the process of the traveling of the vehicle, the positons of the feature regions serving as the position of the vehicle in the current frame do not change suddenly. Therefore, the motion trace information of each of the feature regions recorded in the history tracking sequences may be used to correct or smooth the calculated displacement vector of the corresponding feature region. The correction method may be a conventional mathematical correction method, and the detailed description thereof is omitted here. FIGs. 9C and 9D are schematic drawings illustrating the corrected displacement vectors for the displacement vectors illustrated in FIGs. 9A and 9B. As illustrated in FIG. 9C, after the correction, there are three feature regions with the same displacement vector (motion vector) near the position of the vehicle serving as the detection target; and as illustrated in FIG. 9D, after the correction, the feature regions near the position of the vehicle have different displacement vectors (motion vectors). The feature regions with the same displacement vector are given the same mark (arrow).

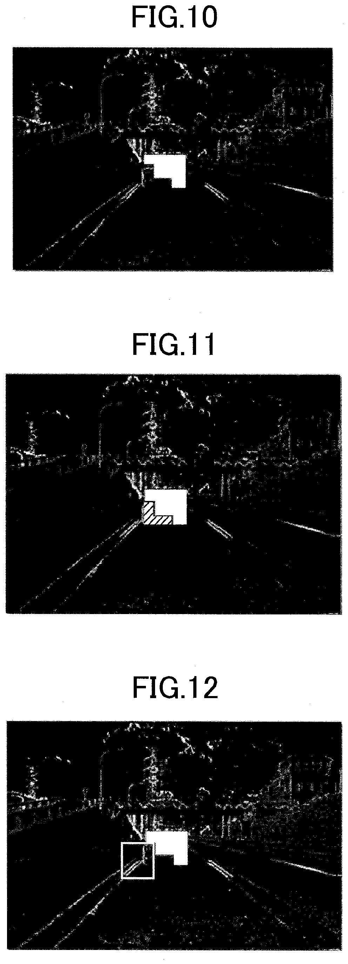

Next, in step S1213, a feature region integration unit 1213 integrates the feature regions to obtain a target set, based on the corrected displacement vectors of the feature regions, the spatial adjacency between the feature regions and the tracking information. The feature regions to be integrated or merged may satisfy the following three conditions. First, in the image of the current frame, the feature regions to be integrated have the same displacement vector, i.e., the same mark; second, in the image of the current frame, the feature regions to be integrated are spatially adjacent to each other and there is no target or feature region serving as a background between these feature regions; and third, the feature regions to be integrated are stable, and have the same displacement vector, stable spatial relationship and the same motion trace in sequential frames. When the feature regions satisfy the above conditions, the feature region integration unit 1213 integrates the feature regions and creates a target set. Sometimes, some internal feature regions in the feature regions that satisfy the above three conditions may be not stable (for example, they have different displacement vectors), however the final integration is not affected by the unstable internal feature regions. FIG. 10 is a schematic drawing illustrating a target set integrated by the feature regions. As illustrated in FIG. 10, the three feature regions with the same displacement vector in FIG. 9C are stable, have the same motion trace in the past sequential frames (for example, 2, 3, 4, 5, 6-10 sequential frames), and are spatially adjacent to each other or have a stable spatial relationship; thus, the three feature regions are integrated. Even though there are regions with different displacement vectors among the three feature regions as illustrated in FIG. 9D, the smaller feature regions among the three feature regions are very unstable and it is determined that these smaller regions are not a target of the background; thus, the target set is not divided by these smaller feature regions. If it is determined that these unstable feature regions are the background, namely, the feature regions to be integrated may be the feature regions that do not belong to the same target, the target set to be integrated is divided by these unstable feature regions serving as a background target.

Next, in step S1214, a potential target region determination unit 1214 included in the target set analysis unit 121 analyzes a shape of the integrated target set to determine a potential target region, and sets the potential target region as a feature region to be re-matched. Usually, in different applications, such as vehicle detection and person detection, the system using the detection method according to an embodiment of the present invention may establish shape models of the different targets to detect the potential target regions. As an example of the vehicle detection, a rectangular model may be used to represent the shape of the vehicle. For the integrated target set, i.e., the detected part of vehicle, other part of the vehicle may be estimated based on the predetermined vehicle model. And then, the potential target region determination unit 1214 determines the estimated other part of the vehicle as the potential target region for which re-matching will be performed. FIG. 11 is a schematic drawing illustrating the feature region obtained by determining a potential target region. As illustrated in FIG. 11, the polygon region with hatched lines is the potential target region determined based on the predetermined vehicle model.

Next, in step S1215, a potential target region re-matching unit 1215 included in the target set analysis unit 121 performs re-matching of the determined potential target region (or potential feature region) serving as a new feature region, thereby obtaining a whole target set region. Specifically, matching between the new feature region and the feature region in the previous frame is performed. If the potential target region (or potential feature region) in the current frame is matched with the previous frame and has the same displacement vector as that of the whole target set, the potential target region is integrated into the integrated target set. Otherwise, the unmatched potential target region is retained as a new feature region for matching the next frame.

Finally, in step S124, the final target set is output as the detected target.

The process of the target detection is described above. However, the scene may change constantly in the real-time process of the target detection and a new target to be detected may appear in the current frame; therefore, a target that cannot be matched based on the history sequence may exist, and the unmatched target may be a target to be detected in the system application scene. Accordingly, it is necessary to perform clustering of the unmatched points in the current frame, so as to prevent the leakage detection where a target newly appears in the current frame. Therefore, the target detection method further includes step S122, after the target set analysis is performed. In step S122, a clustering unit (unmatched point clustering unit) 122 performs clustering for the unmatched points, based on the extracted features and the spatial adjacency. As described in above step Sill, at the start of the method according to an embodiment of the present invention, since matching cannot be performed for the first frame, it is necessary to perform clustering to obtain the feature regions. In step S122, for the first frame, it is considered that no target set has been obtained, and clustering is performed for all of the points in the first frame serving as unmatched points. For subsequent frames, clustering is performed for unmatched points other than the target set, so as to generate a new feature region corresponding to the newly appearing target. As described above, for the unmatched points and regions, clustering of points that have similar disparity values and are adjacent in X and Y directions is performed by a clustering method (such as a connected component analysis (CCA), K-means clustering or the like), thereby obtaining a new feature region to perform matching for the next frame. FIG. 12 is a schematic drawing illustrating a result of clustering unmatched points. As illustrated in FIG. 12, the solid frame shows the clustering result of the unmatched points.

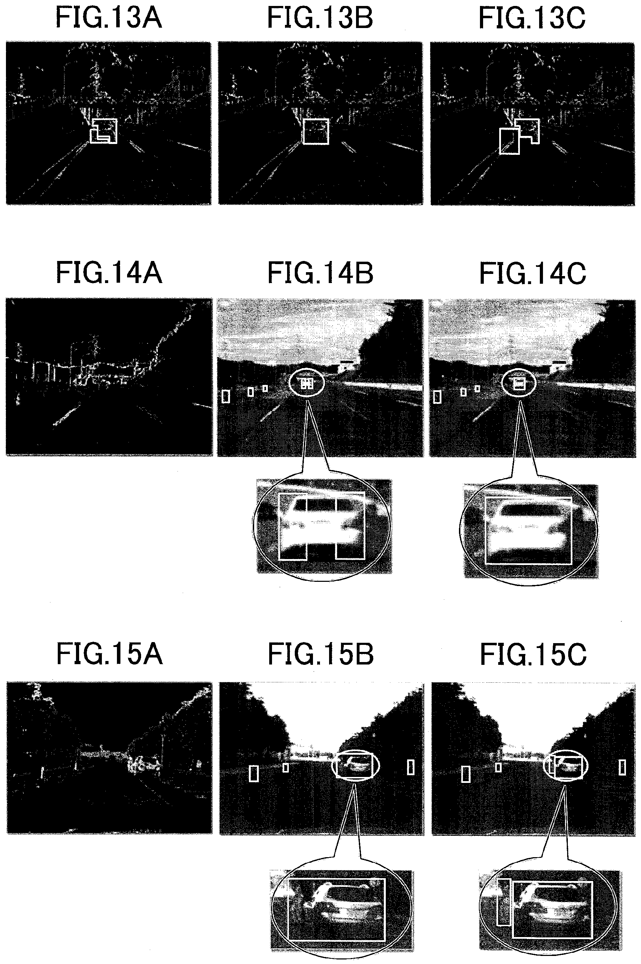

Next, in step S123, a feature update unit 123 updates the feature regions of the image of the current frame and feature values. Specifically, first, the feature regions are updated by using the above integration result and the clustering result of the unmatched points. First, when some feature regions are integrated into a target set, or the integrated target set and a potential target region are integrated into a new target set again, the final target set is set as a new feature region; namely, only the newly integrated target region is set as a new target region. FIG. 13B is a schematic drawing illustrating a result in which a target set and a potential target region are integrated and are updated as a new feature region. Second, a potential target region which secondary matching has not succeeded is updated as a new feature region. If the potential target region has been integrated into the corresponding target set, the potential target region will be not set as a new feature region independently. If the potential target region has not been integrated into the target set, it will be set as a new feature region independently. FIG. 13A is a schematic drawing illustrating a result in which a potential target region is not integrated with a target set but is updated as a new feature region. As illustrated in FIG. 13A, the polygon at the lower left of the vehicle serving as a potential target region is updated as a new feature region; meanwhile, as illustrated by the polygon at the upper right of the vehicle, the target set is set as another new feature region. Finally, a region generated by performing the clustering for unmatched points is set as a new feature region. FIG. 13C is a schematic drawing illustrating a result in which a region obtained by performing clustering of unmatched points is updated as a new feature region. As illustrated in FIG. 13C, the rectangular frame at the lower left of the vehicle represents the clustering result of the unmatched points serving as a new feature region. The new feature regions obtained by updating the above three portions are used as the basis of the matching or a part of the history sequence to perform the target detection of the image of the next frame. It should be noted that, the above three portions may not appear at the same time, an integrated portion may not exist in the above step, or a potential target region may not exist.

In order to perform the matching of the feature regions of the next frame, the feature update unit 123 may update feature values as well as the feature regions. For the newly determined feature regions, the feature values of the features such as texture, shape, corner points, and the like are updated. Furthermore, in the detection of sequential frames, the detected target set changes (due to different viewing angles, scene change, and the like), and the target itself also changes (due to shape change, for example, the change of the posture of a moving person, the change of the shielding between the targets, and the like); therefore, the accuracy and reliability of the target detection in the subsequent frames can be improved by updating the feature values for each of the frames.

FIG. 14A is an original disparity map of the current frame. FIG. 14B is a schematic drawing illustrating a result of a conventional target detection method (such as a method based on frame information). FIG. 14C is a schematic drawing illustrating a result of the detection method according to an embodiment of the present invention. As illustrated in FIGs. 14A to 14C, because horizontal edges are not continuous in the disparity map, the detected vehicle in FIG. 14B is divided incorrectly. On the other hand, as illustrated in FIG. 14C, the vehicle is detected accurately, because the target set analysis based on the displacement vector feature, the spatial adjacency feature and the tracking information are used in the self-learning detection method. Therefore, in the target detection method according to the present invention, adjacent targets can be divided correctly in a case where horizontal edges in the disparity map are not continuous.

FIG. 15A is an original disparity map of the current frame. FIG. 15B is a schematic drawing illustrating a result of a conventional target detection method (such as a method based on frame information). FIG. 15C is a schematic drawing illustrating a result of the detection method according to the present invention. As illustrated in FIGs. 15A to 15C, a vehicle and a person are confused as one target by using the conventional method based on the frame information. On the other hand, as illustrated in FIG. 15C, in the target detection method according to an embodiment of the present invention, the vehicle and the person are separated correctly by using the information of movement and trace.

Additionally, in the light stream algorithm, as a famous target detection method based on inter-frame information, matching of pixels or blocks is performed by using fixed micro features such as corner points, edges, and the like. On the other hand, in the detection method according to an embodiment of the present invention, the feature regions and the feature values are continuously enhanced by self-learning, matching of the enhanced feature regions is performed, and the feature regions and the feature values can be continuously enhanced in the detection of sequential frames; therefore, the robustness becomes greater and the calculation amount becomes smaller.

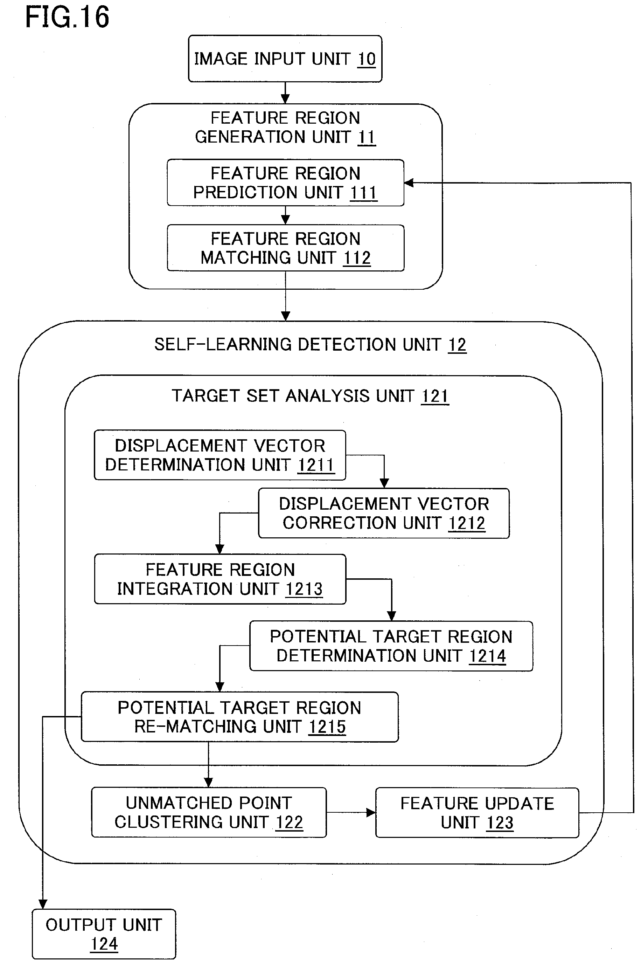

FIG. 16 is a functional block diagram illustrating a system for detecting a target according to an embodiment of the present invention. As illustrated in FIG. 16, the target detection system includes an image obtainment unit (an image input unit) 10 configured to obtain a disparity map or a grayscale image of a current scene; a feature region generation unit 11 configured to predict feature regions in a new real-time screen based on a history sequence of each of the feature regions, and perform matching of the feature regions to obtain the feature regions in the new real-time screen; and a self-learning detection unit 12 configured to perform a target set analysis for the matched feature regions, perform clustering for unmatched points based on spatial adjacency to form a new feature region, and update the obtained feature regions. The feature region generation unit 11 includes a feature region prediction unit 111 configured to predict positions of the feature regions in the next frame (the new real-time screen) by establishing a motion model based on a tracking filter; and a feature region matching unit 112 configured to perform matching of the feature regions for the predicted feature regions based on extracted features. The self-learning detection unit 12 includes a target set analysis unit 121 configured to perform a target set analysis for the feature regions to obtain a set of the feature regions of the target, based on displacement vectors and spatial adjacency between the matched feature regions and tracking information; an unmatched point clustering unit 122 configured to perform clustering for the unmatched points based on the spatial adjacency; and a feature update unit 123 configured to update the feature regions of the current frame and the feature values. The target set analysis unit 121 includes a displacement vector determination unit 1211 configured to calculate the displacement vectors of the matched feature regions, based on relative displacement states of the matched feature regions in the images of the plurality of sequential frames before the current frame; a displacement vector correction unit 1212 configured to correct the calculated displacement vectors of the feature regions based on tracking trace; a feature region integration unit 1213 configured to integrate the feature regions to obtain a target set, based on the corrected displacement vectors of the feature regions, the spatial adjacency between the feature regions, and the tracking information; a potential target region determination unit 1214 configured to analyze a shape of the integrated target set to determine a potential target region for which a re-matching of the feature region is performed; and a potential target region re-matching unit 1215 configured to perform a re-matching of the determined potential target region (or potential feature region) serving as a new feature region, so as to obtain a whole region of the target set.

The basic principle of the present invention is described above with reference to the embodiments. Any one or all of the steps or units of the method or apparatus according to the embodiments may be implemented by hardware, software or a combination thereof in any one of computing devices (including a processor, a storage medium, etc.) or a network of computing devices, and it can be implemented by persons skilled in the art who have read the specification of the present application.

Therefore, the embodiments can also be realized by a program or a set of programs running on any one of computing devices. The computing devices may be well known general-purpose devices. Therefore, the embodiments may also be implemented by providing a program product including program codes for implementing a method or apparatus. That is to say, the program product also belongs to the embodiments of the present invention, and a storage medium storing the program product also belongs to the embodiments. Obviously, the storage medium may be any one of well known storage media or storage media which are to be developed.

In addition, in the apparatus or method of the embodiments of the present invention, units or steps may be divided and/or recombined. The division and/or recombination should be regarded as an equivalent embodiment of the present invention. Steps of the above method may be performed in time order, however the performed sequence is not limited to the time order. Any steps may be performed in parallel or independently.

The present invention is not limited to the specifically disclosed embodiments, and various modifications and replacements may be made without departing from the scope of the present invention as claimed.

**Claims**

1. A method for detecting a target, the method comprising:

obtaining a current frame of a current scene;
determining whether the current frame is the first frame; and
if it is determined that the current frame is not the first frame, predicting, based on history information in a history sequence of a plurality of sequential frames before the current frame, feature regions of the current frame;
performing, based on features extracted according to the need of a specific application, a matching of the feature regions between the feature regions predicted in the current frame and feature regions in image a previous frame;
performing, based on displacement vectors, spatial adjacency between the matched feature regions in the current frame, and tracking information, a target set analysis for the feature regions of the current frame to obtain a set of the feature regions of the target to be detected, and outputting the obtained set of the feature regions as the target;
performing, based on the extracted features and the spatial adjacency, a clustering for points that are not matched; and
updating, by using the result of the target set analysis and the result of the clustering, the feature regions of the current frame and the features of the feature regions, so that the above steps are repeated for a next frame;
wherein
performing the target set analysis includes:

calculating, based on relative displacement states of the matched feature regions in the plurality of sequential frames before the current frame, the displacement vectors of the matched feature regions in the current frame,
correcting, based on a tracking trace indicated by the history information of the plurality of sequential frames before the current frame, the displacement vectors of the feature regions calculated in the current frame, and
integrating, based on the corrected displacement vectors of the feature regions, the spatial adjacency between the feature regions, and the tracking information, the feature regions of the current frame to obtain a target set;
the method **characterised in that**
performing the target set analysis further includes:

analyzing a shape of the integrated target set to determine a potential target region belonging to the integrated target set,
performing, based on the features extracted according to the need of the specific application, a re-matching of the feature regions between the determined potential target region serving as a feature region and a feature region in the previous frame, and
integrating the matched potential target region with the same displacement vector as that of the integrated target set into the target set to obtain a whole set region of the target, and retaining the unmatched potential target region serving as a new feature region.

2. The method for detecting a target according to claim 1, wherein

in determination of the potential target region, the potential target region is detected by establishing shape models of the different targets in advance.

3. A system for detecting a target, the system comprising means adapted to perform the method of claims 1 or 2.

**Patentansprüche**

1. Verfahren zum Ermitteln eines Ziels, wobei das Verfahren umfasst:

Erlangen eines aktuellen Einzelbilds einer aktuellen Szene;

Bestimmen, ob das aktuelle Einzelbild das erste Einzelbild ist; und

wenn bestimmt wird, dass das aktuelle Einzelbild nicht das erste Einzelbild ist, Vorhersagen von Merkmalsbereichen des aktuellen Einzelbilds auf der Grundlage von Verlaufsinformation in einer Verlaufssequenz einer Vielzahl von sequenziellen Einzelbildern vor dem aktuellen Einzelbild;

Durchführen eines Abgleichs der Merkmalsbereiche zwischen den im aktuellen Einzelbild vorhergesagten Merkmalsbereichen und den Merkmalsbereichen in einem vorherigen Einzelbild auf der Grundlage von Merkmalen, die gemäß den Anforderungen einer bestimmten Anwendung extrahiert wurden;

Durchführen einer Zielmengenanalyse für die Merkmalsbereiche des aktuellen Einzelbilds auf der Grundlage von Verschiebungsvektoren, räumlicher Nähe zwischen den abgeglichenen Merkmalsbereichen im aktuellen Einzelbild und Verfolgungsinformation, um eine Menge der Merkmalsbereiche des zu ermittelnden Ziels zu erlangen, und Ausgeben der erlangten Menge der Merkmalsbereiche als das Ziel;

Durchführen eines Clusterings für Punkte, die nicht übereinstimmen, auf der Grundlage der extrahierten Merkmale und der räumlichen Nähe; und

Aktualisieren der Merkmalsbereiche des aktuellen Einzelbilds und der Merkmale der Merkmalsbereiche durch Verwenden des Ergebnisses der Zielmengenanalyse und des Ergebnisses des Clusterings, sodass die obigen Schritte für ein nächstes Einzelbild wiederholt werden; worin

das Durchführen der Zielmengenanalyse einschließt:

Berechnen der Verschiebungsvektoren der angepassten Merkmalsbereiche im aktuellen Einzelbild auf der Grundlage von relativen Verschiebungszuständen der abgeglichenen Merkmalsbereiche in der Vielzahl von sequenziellen Einzelbildern vor dem aktuellen Einzelbild,

Korrigieren der Verschiebungsvektoren der im aktuellen Einzelbild berechneten Merkmalsbereiche auf der Grundlage einer Verfolgungsspur, die durch die Verlaufsinformation der Vielzahl von sequenziellen Einzelbildern vor dem aktuellen Einzelbild angegeben wird, und

Integrieren der Merkmalsbereiche des aktuellen Einzelbilds auf der Grundlage der korrigierten Verschiebungsvektoren der Merkmalsbereiche, der räumlichen Nähe zwischen den Merkmalsbereichen und der Trackinginformation, um eine Zielmenge zu erlangen;

wobei das Verfahren **dadurch gekennzeichnet ist, dass**

das Durchführen der Zielmengenanalyse ferner einschließt:

Analysieren einer Form der integrierten Zielmenge, um einen potenziellen Zielbereich zu bestimmen, der zur integrierten Zielmenge gehört,

Durchführen eines Neuabgleichs der Merkmalsbereiche zwischen dem ermittelten potenziellen Zielbereich, der als Merkmalsbereich dient, und einem Merkmalsbereich im vorherigen Einzelbild auf der Grundlage der Merkmale, die gemäß den Anforderungen der bestimmten Anwendung extrahiert wurden, und

Integrieren des abgeglichenen potenziellen Zielbereichs mit dem gleichen Verschiebungsvektor wie dem der integrierten Zielmenge in die Zielmenge, um einen ganzen Mengenbereich des Ziels zu erlangen, und Beibehalten des nicht abgeglichenen potenziellen Zielbereichs, der als ein neuer Merkmalsbereich dient.

2. Verfahren zum Ermitteln eines Ziels nach Anspruch 1, worin

bei der Bestimmung des potenziellen Zielbereichs der potenzielle Zielbereich durch im Voraus erfolgendes Erstellen von Formmodellen der unterschiedlichen Ziele ermittelt wird.

3. System zum Ermitteln eines Ziels, wobei das System Mittel umfasst, die dafür eingerichtet sind, das Verfahren nach Anspruch 1 oder 2 durchzuführen.

## Revendications

1. Procédé pour détecter une cible, le procédé comprenant :

   l'obtention d'une image courante d'une scène courante ;
   la détermination de si oui ou non l'image courante est la première image ; et
   s'il est déterminé que l'image courante n'est pas la première image,
   la prédiction, sur la base d'une information d'historique dans une séquence d'historiques d'une pluralité d'images séquentielles avant l'image courante, de régions de caractéristique de l'image courante ;
   la réalisation, sur la base de caractéristiques qui sont extraites en fonction du besoin d'une application spécifique, d'une mise en correspondance des régions de caractéristique entre les régions de caractéristique qui sont prédites dans l'image courante et des régions de caractéristique dans une image précédente ;
   la réalisation, sur la base de vecteurs de déplacement, d'une contiguïté spatiale entre les régions de caractéristique mises en correspondance dans l'image courante et d'une information de pistage, d'une analyse de jeu de cibles pour les régions de caractéristique de l'image courante afin d'obtenir un jeu des régions de caractéristique de la cible qui est destinée à être détectée, et l'émission en sortie du jeu obtenu des régions de caractéristique en tant que cible ;
   la réalisation, sur la base des caractéristiques extraites et de la contiguïté spatiale, d'un groupage pour des points qui ne sont pas mis en correspondance ; et
   la mise à jour, en utilisant le résultat de l'analyse de jeu de cibles et le résultat du groupage, des régions de caractéristique de l'image courante et des caractéristiques des régions de caractéristique de telle sorte que les étapes présentées ci-avant soient répétées pour une image suivante ;
   dans lequel
   la réalisation de l'analyse de jeu de cibles inclut :

      le calcul, sur la base d'états de déplacement relatif des régions de caractéristique mises en correspondance dans la pluralité d'images séquentielles avant l'image courante, des vecteurs de déplacement des régions de caractéristique mises en correspondance dans l'image courante ;
      la correction, sur la base d'une trace de pistage qui est indiquée par l'information d'historique de la pluralité d'images séquentielles avant l'image courante, des vecteurs de déplacement des régions de caractéristique qui sont calculés dans l'image courante ; et
      l'intégration, sur la base des vecteurs de déplacement corrigés des régions de caractéristique, de la contiguïté spatiale entre les régions de caractéristique et de l'information de pistage, des régions de caractéristique de l'image courante de manière à obtenir un jeu de cibles ;

   le procédé étant **caractérisé en ce que**
   la réalisation de l'analyse de jeu de cibles inclut en outre :

      l'analyse d'une forme du jeu de cibles intégré de manière à déterminer une région cible potentielle qui appartient au jeu de cibles intégré ;
      la réalisation, sur la base des caractéristiques qui sont extraites en fonction du besoin de l'application spécifique, d'une mise en correspondance à nouveau des régions de caractéristique entre la région cible potentielle déterminée qui joue le rôle de région de caractéristique et une région de caractéristique dans l'image précédente ; et
      l'intégration de la région cible potentielle mise en correspondance avec le même vecteur de déplacement que celui du jeu de cibles intégré à l'intérieur du jeu de cibles de manière à obtenir une région de jeu complet de la cible, et la retenue de la région cible potentielle non mise en correspondance qui joue le rôle de nouvelle région de caractéristique.

2. Procédé pour détecter une cible selon la revendication 1, dans lequel
   au niveau de la détermination de la région cible potentielle, la région cible potentielle est détectée en établissant des modèles de forme des différentes cibles à l'avance.

3. Système pour détecter une cible, le système comprenant des moyens qui sont adaptés pour réaliser le procédé selon les revendications 1 ou 2.

## FIG.1A

## FIG.1B

TWO TARGETS
ARE CONFUSED
AS ONE TARGET

## FIG.2A

## FIG.2B

ONE TARGET
IS DIVIDED

## FIG.3

START

S10 — INPUT IMAGE DATA OF CURRENT FRAME

S11 — FEATURE REGION MATCHING

S12 — SELF-LEARNING DETECTION

S13 — OUTPUT DETECTED TARGET

END

# FIG.4

START

S10 — INPUT IMAGE DATA OF CURRENT FRAME

S110 — IS IT IMAGE OF FIRST FRAME? — YES

NO

TO S122

S111 — FEATURE REGION PREDICTION

S112 — FEATURE REGION MATCHING

S113 — OUTPUT MATCHED FEATURE REGIONS

TO S12

# FIG.5A

# FIG.5B

# FIG.6

# FIG.7

FROM S113

```
RECEIVE CURRENT IMAGE AND
MATCHED FEATURE REGIONS          ~S120

TARGET SET ANALYSIS              ~S121

FROM S110→ UNMATCHED POINT CLUSTERING   ~S122

FEATURE UPDATING                 ~S123

OUTPUT DETECTED TARGET           ~S124
```

END

# FIG.8

FROM S120

S1211 — DETERMINE DISPLACEMENT VECTORS OF MATCHED FEATURE REGIONS

S1212 — DISPLACEMENT VECTOR CORRECTION

S1213 — FEATURE REGION INTEGRATION

S1214 — POTENTIAL FEATURE REGION DETERMINATION

S1215 — PERFORM FEATURE REGION MATCHING FOR POTENTIAL FEATURE REGIONS, INTEGRATE POTENTIAL FEATURE REGION WITH THE SAME DISPLACEMENT VECTOR INTO TARGET SET AND SET POTENTIAL FEATURE REGION WITH DIFFERENT DISPLACEMENT VECTOR AS NEW FEATURE REGION

TO S122

FIG.9C

FIG.9A

FIG.9B

FIG.9D

# FIG.10

# FIG.11

# FIG.12

## FIG.13A   FIG.13B   FIG.13C

## FIG.14A   FIG.14B   FIG.14C

## FIG.15A   FIG.15B   FIG.15C

# FIG.16

```
┌─────────────────────────────┐
│   IMAGE INPUT UNIT 10        │
└─────────────────────────────┘
              │
              ▼
┌───────────────────────────────────────┐
│      FEATURE REGION                    │
│    GENERATION UNIT 11                  │
│  ┌─────────────────────────────┐       │
│  │   FEATURE REGION            │◄──────┼──┐
│  │ PREDICTION UNIT 111         │       │  │
│  └─────────────────────────────┘       │  │
│              │                          │  │
│              ▼                          │  │
│  ┌─────────────────────────────┐       │  │
│  │   FEATURE REGION            │       │  │
│  │  MATCHING UNIT 112          │       │  │
│  └─────────────────────────────┘       │  │
└───────────────────────────────────────┘  │
              │                              │
              ▼                              │
┌──────────────────────────────────────────────────────┐
│      SELF-LEARNING DETECTION UNIT 12                   │
│  ┌──────────────────────────────────────────────────┐ │
│  │      TARGET SET ANALYSIS UNIT 121                 │ │
│  │  ┌──────────────────────────┐                     │ │
│  │  │ DISPLACEMENT VECTOR      │──┐                  │ │
│  │  │ DETERMINATION UNIT 1211  │  │                  │ │
│  │  └──────────────────────────┘  ▼                  │ │
│  │        ┌────┐   ┌──────────────────────────┐      │ │
│  │        │    │   │ DISPLACEMENT VECTOR      │      │ │
│  │        │    │   │ CORRECTION UNIT 1212     │      │ │
│  │        ▼    └───┘                          │      │ │
│  │  ┌──────────────────────────┐              │      │ │
│  │  │   FEATURE REGION         │              │      │ │
│  │  │ INTEGRATION UNIT 1213    │──┐           │      │ │
│  │  └──────────────────────────┘  │           │      │ │
│  │              │                  ▼           │      │ │
│  │              │     ┌──────────────────────────┐   │ │
│  │              │     │ POTENTIAL TARGET REGION  │   │ │
│  │              │     │ DETERMINATION UNIT 1214  │   │ │
│  │              ▼     └──────────────────────────┘   │ │
│  │  ┌──────────────────────────┐                     │ │
│  │  │ POTENTIAL TARGET REGION  │                     │ │
│  │  │ RE-MATCHING UNIT 1215    │                     │ │
│  │  └──────────────────────────┘                     │ │
│  └──────────────────────────────────────────────────┘ │
│              │                                          │
│              ▼                                          │
│  ┌──────────────────────┐     ┌──────────────────────┐ │
│  │ UNMATCHED POINT      │────▶│  FEATURE UPDATE      │─┼──┘
│  │ CLUSTERING UNIT 122  │     │  UNIT 123            │ │
│  └──────────────────────┘     └──────────────────────┘ │
└──────────────────────────────────────────────────────┘
      │
      ▼
┌─────────────────┐
│  OUTPUT UNIT    │
│     124         │
└─────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 005937079 A

- US 7801330 B2

**Non-patent literature cited in the description**

- Motion-based segmentation and region tracking in image sequences. **BADENAS J et al.** Pattern Recognition. Elsevier, 01 March 2001, vol. 34, 661-670

- **KEVIN CANNONS.** A Review of Visual Tracking. *Technical Report CSE-2008-07, York University, Department of Computer Science and Engineering,* 16 September 2008, 1-242